(19) Europäisches Patentamt
European Patent Office
Office européen des brevets

(11) **EP 3 331 170 A1**

(12) **EUROPEAN PATENT APPLICATION**

(43) Date of publication:
**06.06.2018 Bulletin 2018/23**

(51) Int Cl.:
***H04B 3/32*** (2006.01)

(21) Application number: **16306616.0**

(22) Date of filing: **05.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent
91620 Nozay (FR)**

(72) Inventors:
• **TSIAFLAKIS, Paschalis
2018 Antwerpen (BE)**
• **COOMANS, Werner
2018 Antwerpen (BE)**
• **MAES, Jochen
2018 Antwerpen (BE)**

(74) Representative: **D'Halleweyn, Nele Veerle Trees Gertrudis et al
Arnold & Siedsma
Bezuidenhoutseweg 57
2594 AC The Hague (NL)**

(54) **METHOD AND COMMUNICATION UNIT FOR COMBINED PRECODING AND NEAR-END CROSSTALK CANCELLATION**

(57)    A communication unit for communication on a plurality of transmission lines connecting the communication unit to another communication unit; comprising: a precoder comprising first and second output ports for outputting respective precoded generated signals and input ports for inputting first data signals, with more output ports than input ports; wherein the first output ports are coupled to first transmission lines, and are configured to output first precoded signals on the first transmission lines for transmitting the first data signals to the other communication unit and for mitigating at least far-end crosstalk on at least the first transmission lines; the second output ports are coupled to second transmission lines, and are configured to output second precoded signals on the second transmission lines for mitigating at least near-end crosstalk on at least the second transmission lines; the communication unit further comprises: receiver units configured for receiving second data signals.

FIG. 2A

**Description**

Field of Invention

The present invention relates to communication systems. Particular embodiments relate to a method, a computer program product, and a communication unit for communication on a plurality of transmission lines of a communication system.

Background

Bidirectional communication, or two-way communication, may be defined as transmitting from a given communication unit to another communication unit and receiving at the given communication unit from the other communication unit. Full-duplex transmission is a specific form of bidirectional communication and may be defined in this context as concurrently (i.e. at the same time) transmitting from the given communication unit to the other communication unit and receiving at the given communication unit from the other communication unit, in particular on the same frequency or frequencies. Full-duplex transmission has become more important over the last few years in several communications fields. For instance, in 5G wireless communications full-duplex transmission is being considered as an important mechanism to boost performance. Several (mobile) system vendors are coming up with proof-of-concepts to illustrate their full-duplex transmission scheme.

Given this increasing importance of full-duplex transmission and its potential to increase capacity, it is desired to develop low-complexity vectoring schemes that allow for high-performant, low-latency full-duplex operation.

Schemes have been proposed to realize full-duplex transmission in a multi-line environment through vectoring by mitigating NEXT (near-end crosstalk) and ECHO (self-inflicted near-end crosstalk), in addition to FEXT (far-end crosstalk).

These schemes however require a significant increase in vectoring requirements (e.g. number of vectoring coefficients, area, power, interfaces, dynamic range) compared to typical TDD (time-division duplexing) based FEXT-only mitigation.

This may impact the system cost and complexity, or may result in a reduction of the number of users that can be served in full-duplex transmission for a certain platform cost.

Summary

It is an object of embodiments of the present invention to provide a way to mitigate near-end crosstalk using precoding, by balancing complexity for performance.

According to a first aspect of the present invention, there is provided a communication unit for communication on a plurality of transmission lines of a communication system, the plurality of transmission lines connecting the communication unit of the communication system to another communication unit of the communication system. The communication unit comprises a precoder and at least two receiver units. The precoder comprises at least two first and at least two second output ports for outputting respective precoded generated signals and at least two input ports for inputting at least two first data signals, wherein the number of output ports is greater than the number of input ports. The at least two first output ports are coupled to at least two first transmission lines of the plurality of transmission lines, and are configured to output at least two first precoded signals on the at least two first transmission lines for transmitting the at least two first data signals to the other communication unit and for mitigating at least far-end crosstalk on at least the at least two first transmission lines. The at least two second output ports are coupled to at least two second transmission lines of the plurality of transmission lines, and are configured to output at least two second precoded signals on the at least two second transmission lines for mitigating at least near-end crosstalk on at least the at least two second transmission lines. The at least two receiver units are configured for receiving at least two second data signals from the other communication unit on the at least two second transmission lines.

In this manner, by transmitting to the other communication unit and receiving from the other communication unit, the communication unit provides bidirectional communication over the plurality of transmission lines as a whole - however, it is to be noted that communication is not necessarily bidirectional over each individual transmission line of the plurality of transmission lines. Moreover, by applying the at least two second precoded signals (as opposed to postcoded signals), complexity may be reduced, because the required number of vectoring coefficients may be reduced, at a cost of performance. Furthermore, in specific embodiments relating to wireline technology, the number of receiving analogue frontends and the number of interfaces to exchange data can be reduced.

In a particularly preferred embodiment, the at least two first output ports, the at least two second output ports, and the at least two receiver units are configured for operating concurrently. In this manner, the communication unit may achieve full-duplex transmission.

In a specific embodiment, the at least two first precoded signals may comprise the at least two first data signals, i.e. communication data from the communication unit for the other communication unit, and pre-compensation data for mitigating far-end crosstalk based on channel-state information of the plurality of transmission lines; the at least two second precoded signals may comprise pre-compensation data for mitigating near-end crosstalk based on channel-state information of the plurality of transmission lines; and the at least two second data signals may comprise communication data from the other communication unit for the communication unit. It will be understood that communication data may be based on one or more streams of information symbols to be communicated from a given communication unit to another given communication unit.

In a further developed embodiment, the at least two first transmission lines and the at least two second transmission lines are different sets of transmission lines.

In this manner, the required number of analogue components may be reduced, at a cost of performance. Some transmission lines may then not be used for data transmission in a particular direction (i.e. either upstream or downstream). In this case, communication over the at least two first transmission lines individually may be considered unidirectional, since the at least two first data signals are transmitted on a different set than the set on which the at least two second data signals are received. Also, communication over the at least two second transmission lines individually may also be considered unidirectional, since the at least two second data signal are received on a different set than the set on which the at least two first data signal are transmitted.

In a further developed embodiment, the at least two second output ports are coupled to the at least two second transmission lines in such a way as to insert the at least two second precoded signals along at least two respective transmission paths of the communication unit. Moreover, the at least two second precoded signals are further also for mitigating at least far-end crosstalk on at least the at least two second transmission lines. Moreover, the at least two first precoded signals are further also for mitigating at least near-end crosstalk on at least the at least two first transmission lines.

In this manner, the complexity of the logical design of the precoder may be reduced, compared to the case in which FEXT and NEXT of all lines is mitigated with postcoding.

In a further developed embodiment, the at least two second output ports are coupled to the at least two second transmission lines in such a way as to insert the at least two second precoded signals along at least two respective reception paths of the communication unit and to combine it with the at least two second data signals in the analogue domain.

In this manner, the risk of saturation of analogue-digital converters can be reduced if near-end crosstalk aggregate power is larger than aggregate received power.

In a further developed embodiment, the at least two first transmission lines and the at least two second transmission lines are identical sets of transmission lines; and wherein the at least two second output ports are coupled to the at least two second transmission lines in such a way as to insert the at least two second precoded signals along at least two respective reception paths of the communication unit and to combine it with the at least two second data signals in the analogue domain.

In this manner, in specific embodiments relating to wireline technology, no additional wirelines are required to mitigate near-end crosstalk. In other words, the available transmission lines may be used more effectively. In this case, since the at least two first transmission lines are the same as the at least two second transmission lines, communication over them individually may be considered bidirectional, since the at least two first data signals are transmitted on them and the at least two second data signals are received on them. Moreover, the risk of saturation of analogue-digital converters can be reduced if near-end crosstalk aggregate power is larger than aggregate received power.

In a further developed embodiment, the communication unit is further adapted for: obtaining a traffic load indication indicating traffic load on the plurality of transmission lines; based on the obtained traffic load indication, determining a desired ratio of downstream traffic to upstream traffic, wherein downstream traffic is traffic going from a network side of the plurality of transmission lines to a client side of the plurality of transmission lines and upstream traffic is traffic going from the client side to the network side; and, based on the determined desired ratio, assigning at least one transmission line of the plurality of transmission lines to one of the at least two first transmission lines and the at least two second transmission lines, such that the ratio of the number of first transmission lines to the number of second transmission lines is in accordance with the desired ratio of downstream traffic to upstream traffic.

In this manner, downstream transmission can be allocated at least as many or more resources as or than upstream transmission. In this context, downstream transmission is to be understood as transmission from the communication unit situated at the network side towards the communication unit situated at the client side, and upstream transmission is to be understood as transmission from the communication unit situated at the client side towards the communication unit situated at the network side.

In a specifically preferred example, the traffic load indication may indicate an instantaneous traffic load prediction. In an alternative specifically preferred example, the traffic load indication may indicate a long-term traffic load prediction, for example a long-term traffic load prediction over a week, for example to provide relatively asymmetric behaviour (with significantly more downstream traffic than upstream traffic) during the evening on weekdays and during weekends and relatively symmetric behaviour (with approximately commensurate downstream traffic and upstream traffic) during the day on weekdays.

In this manner, the relative resources allocated to downstream and upstream transmission can be varied, e.g. based on upstream transmission requirements of the communication system.

In a further developed example, the precoder uses a concatenation of a non-linear precoding scheme and a linear precoding scheme. In a particularly preferred example, the non-linear precoding scheme may comprise a Tomlinson-Harashima precoding scheme.

In this manner, performance can be increased. In a particular example, the non-linear precoding scheme may be used in particular for mitigating far-end crosstalk and the linear precoding scheme may be used in particular for mitigating both far-end crosstalk and near-end crosstalk.

In a further developed embodiment, the communication unit comprises a postcoder configured for applying linear postcoding to the received at least two second data signals

In this manner, performance can be further increased, by mitigating far-end crosstalk from the opposite direction.

According to yet another aspect of the present invention, there is provided a communication system comprising a plurality of transmission lines, a communication unit according to any one of the communication unit embodiments described above connected to the plurality of transmission lines at a network side, and at least one other communication unit according to any one of the communication unit embodiments described above connected to the plurality of transmission lines at a client side.

It will be understood by the skilled person that the features and advantages disclosed hereinabove with respect to various embodiments of the method described above may also apply, *mutatis mutandis,* to various embodiments of the communication system. It will be understood by the skilled person that the features and advantages disclosed hereinabove with respect to various embodiments of the method may also apply, *mutatis mutandis,* to various embodiments of the communication unit.

In a particularly preferred embodiment, the outputting of the at least two first precoded signals, the outputting of the at least two second precoded signals, and the receiving of the at least two second data signals are performed concurrently. In this manner, the method may achieve full-duplex transmission.

In a specific embodiment, the at least two first precoded signals may comprise the at least two first data signals, i.e. communication data from the communication unit for the other communication unit and pre-compensation data for mitigating far-end crosstalk based on channel-state information of the plurality of transmission lines; the at least two second precoded signals may comprise pre-compensation data for mitigating near-end crosstalk based on channel-state information of the plurality of transmission lines; and the at least two second data signals may comprise communication data from the other communication unit for the communication unit. It will be understood that communication data may be based on one or more streams of information symbols to be communicated from a given communication unit to another given communication unit.

In a further developed embodiment, the at least two first transmission lines and the at least two second transmission lines are different sets of transmission lines.

In a further developed embodiment, the at least two second precoded signals are inserted along at least two respective transmission paths of the communication unit; wherein the at least two second precoded signals are further for mitigating at least far-end crosstalk on at least the at least two second transmission lines; and wherein the at least two first precoded signals are further also for mitigating at least near-end crosstalk on at least the at least two first transmission lines.

In a further developed embodiment, the at least two second precoded signals are inserted along at least two respective reception paths of the communication unit and combined with the at least two second data signal in the analogue domain.

In a further developed embodiment, the at least two first transmission lines and the at least two second transmission lines are identical sets of transmission lines. Moreover, the at least two second precoded signals are inserted along at least two respective reception paths of the communication unit and combined with the at least two second data signals in the analogue domain.

In a further developed embodiment, the method further comprises: obtaining a traffic load indication indicating traffic load on the plurality of transmission lines; based on the obtained traffic load indication, determining a desired ratio of downstream traffic to upstream traffic, wherein downstream traffic is traffic going from a network side of the plurality of transmission lines to a client side of the plurality of transmission lines and upstream traffic is traffic going from the client side to the network side; and, based on the determined desired ratio, assigning at least one transmission line of the plurality of transmission lines to one of the at least two first transmission lines and the at least two second transmission lines, such that the ratio of the number of first transmission lines to the number of second transmission lines is in accordance with the desired ratio of downstream traffic to upstream traffic.

In a specifically preferred example, the traffic load indication may indicate an instantaneous traffic load prediction.

In an alternative specifically preferred example, the traffic load indication may indicate a long-term traffic load prediction, for example a long-term traffic load prediction over a week, as described above with reference to another example.

In a further developed example, the at least two first precoded signals and the at least two second precoded signals may result from using a concatenation of a non-linear precoding scheme and a linear precoding scheme. In a particularly preferred example, the non-linear precoding scheme may comprise a Tomlinson-Harashima precoding scheme. In a particular example, the non-linear precoding scheme may be used in particular for mitigating far-end crosstalk and the linear precoding scheme may be used in particular for mitigating both far-end crosstalk and near-end crosstalk.

In a further developed embodiment, the method comprises applying linear postcoding to the received at least two second data signals.

According to yet another aspect of the present invention, there is provided a method for full-duplex transmission on a plurality of transmission lines of a communication system, wherein the method comprises the operations of any one of the method embodiments described above performed at a communication unit of the communication system connected to a network side of the plurality of transmission lines, and wherein the method comprises the operations of any one of the method embodiments described above performed at at least one other communication unit of the communication system connected to a client side of the plurality of transmission lines.

It will be understood by the skilled person that the features and advantages disclosed hereinabove with respect to various embodiments of the method described above may also apply, *mutatis mutandis,* to various embodiments of this method.

According to yet another aspect of the present invention, there is provided a computer program product comprising a computer-executable program of instructions for performing, when executed on a computer, the operations of the method of any one of the method embodiments described above.

It will be understood by the skilled person that the features and advantages disclosed hereinabove with respect to embodiments of the method may also apply, *mutatis mutandis,* to embodiments of the computer program product.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

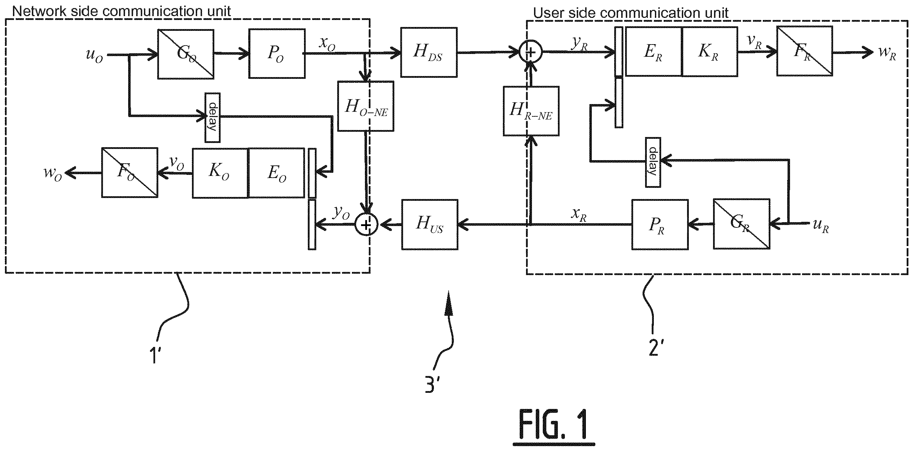

Figure 1 schematically illustrates a prior art embodiment of a communication system comprising a prior art communication unit at a network side of a plurality of transmission lines and another prior art embodiment of a communication unit at a client side of the plurality of transmission lines;

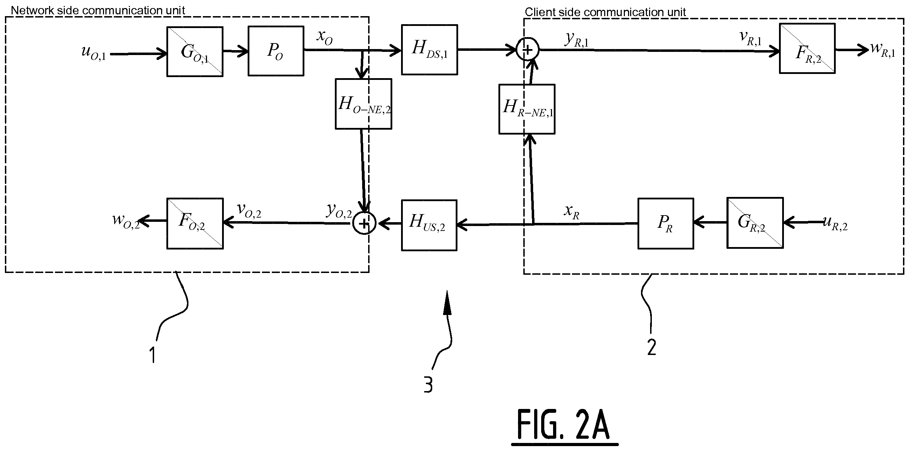

Figure 2A schematically illustrates an exemplary embodiment of a communication system comprising an exemplary embodiment of a communication unit according to the present invention at a network side of a plurality of transmission lines and another exemplary embodiment of a communication unit according to the present invention at a client side of the plurality of transmission lines;

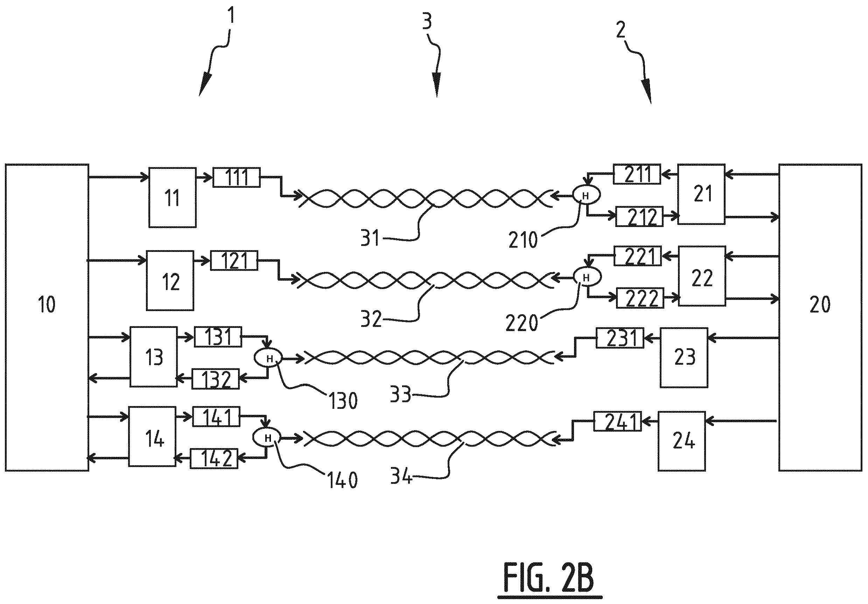

Figure 2B schematically illustrates an exemplary implementation of the exemplary embodiment of a communication system of Figure 2A;

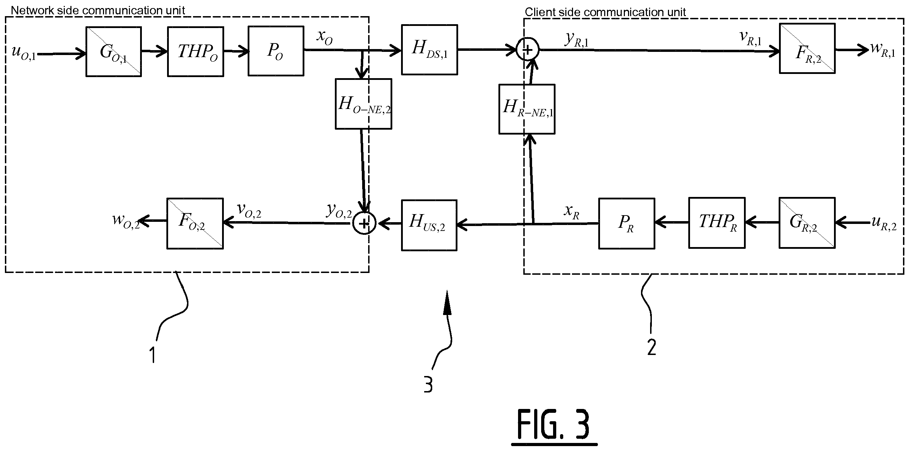

Figure 3 schematically illustrates another exemplary embodiment of a communication system comprising an exemplary embodiment of a communication unit according to the present invention at a network side of a plurality of transmission lines and another exemplary embodiment of a communication unit according to the present invention at a client side of the plurality of transmission lines, e.g. a further development of the embodiment shown in Figure 2;

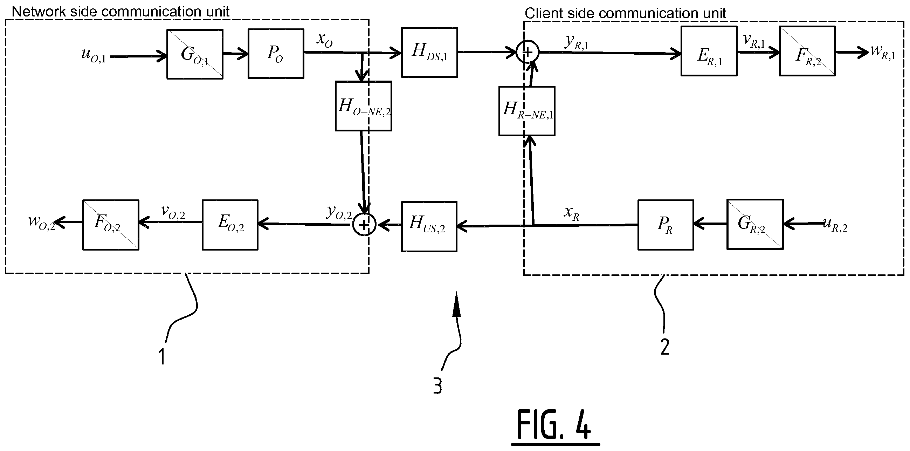

Figure 4 schematically illustrates another exemplary embodiment of a communication system comprising an exemplary embodiment of communication unit according to the present invention at a network side of a plurality of transmission lines and another exemplary embodiment of a communication unit according to the present invention at a client side of the plurality of transmission lines, e.g. a further development of the embodiment shown in Figure 2;

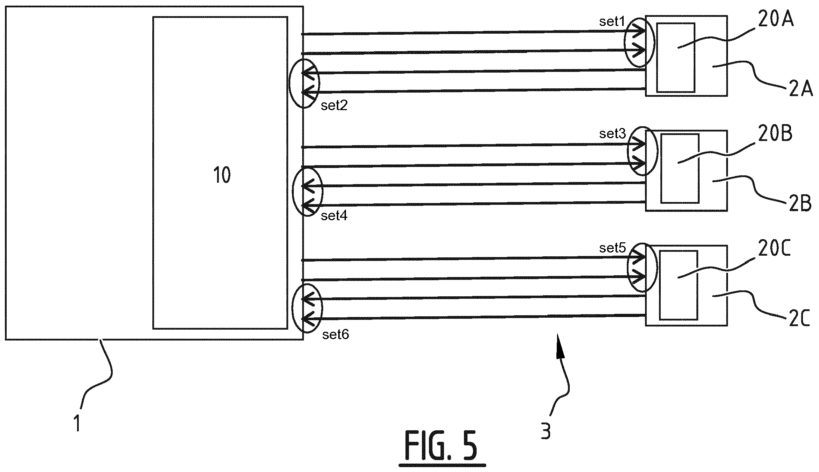

Figure 5 schematically illustrates another exemplary embodiment of a communication system comprising an exemplary embodiment of a communication unit according to the present invention at a network side of a plurality of transmission lines and at least two other exemplary embodiments of a communication unit according to the present invention at a client side of the plurality of transmission lines, e.g. a further development of the embodiment shown in Figure 2; and

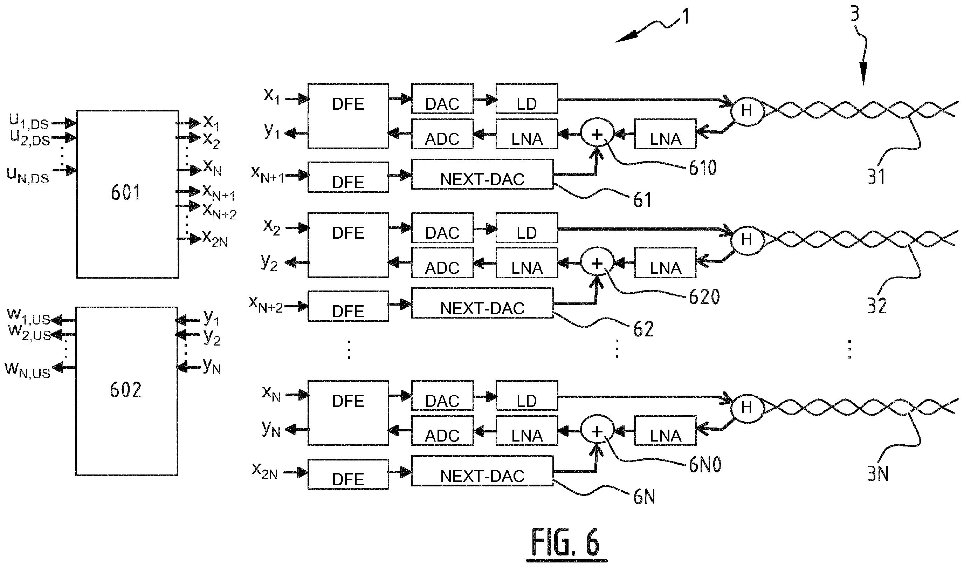

Figure 6 schematically illustrates another exemplary embodiment of a communication unit according to the present invention.

Description of embodiments

A currently feasible way to provide full-duplex transmission (and thus full-duplex vectoring) in a communication system is to use with three full NxN vectoring matrices both in a communication unit situated at the network side (e.g. in a DPU, distribution point unit, or in a DSLAM, digital subscriber line access multiplexer) and in a communication unit situated at the client side (e.g. at a CPE, customer premises equipment), where N refers to the number of transmission lines between the two communication units. However, it will be understood by the skilled person that the communication unit at the network side may also be a different type of communication unit than a DPU, such as access nodes or other network devices that connect a client to a network. Likewise, it will be understood by the skilled person that the communication unit at the client side may also be a different type of communication unit than a CPE, such as end-user router devices of a client or user.

Moreover, it is to be noted that in this specification the term "transmission line" may refer to subscriber lines such as twisted pairs, but also to other types of wirelines including coaxial lines, and may also refer to transmission modes, such as a so-called phantom mode or common mode, as well as a differential mode, and thus not only to physical media.

Figure 1 schematically illustrates a prior art embodiment of such a communication system comprising a prior art communication unit 1' at a network side of a plurality of transmission lines 3' and another prior art embodiment of a communication unit 2' at a client side (also called "user-side") of the plurality of transmission lines 3'.

In Figure 1 (and, where applicable, in the other figures), the following symbols denote the following entities:

- $u_O$: downstream information symbol vector;

- $w_R$: downstream equalized symbol vector;

- $u_R$: upstream information symbol vector;

- $w_O$: upstream equalized symbol vector;

- $x_O$: downstream precoded symbol vector;

- $x_R$: upstream precoded symbol vector;

- $v_O$: downstream postcoded symbol vector;

- $v_R$: upstream postcoded symbol vector;

- $y_R$: downstream received symbol vector;

- $y_O$: upstream received symbol vector;

- $G_O$: downstream diagonal gain scaling matrix;

- $G_R$: upstream diagonal gain scaling matrix;

- $F_R$: downstream diagonal FEQ matrix;

- $F_O$: upstream diagonal FEQ matrix;

- $P_O$: downstream precoder matrix;

- $P_R$: upstream precoding matrix

- $E_O$: upstream postcoder matrix (fed by $y_O$);

- $K_O$: network-side near-end crosstalk (including ECHO) mitigation matrix (fed by a delayed version of $u_O$);

- $E_R$: downstream postcoder matrix (fed by $y_R$);

- $K_R$: client-side near-end crosstalk (including ECHO) mitigation matrix (fed by a delayed version of $u_R$);

- $H_{DS}$: downstream far-end crosstalk (FEXT) channel matrix;

- $H_{US}$: upstream far-end crosstalk (FEXT) channel matrix;

- $H_{O\text{-}NE}$: network-side near-end crosstalk (including ECHO) channel matrix; and

- $H_{R\text{-}NE}$: client-side near-end crosstalk (including ECHO) channel matrix.

In this notation, lowercase symbols denote vectors, and uppercase symbols denote matrices (full, diagonal or block diagonal, depending on the level of coordination, as will be understood by the skilled person). Subscript 'O' refers to 'office', as shorthand for the network side, and subscript 'R' refers to 'remote', as shorthand for the client side. All symbols are to be interpreted in the frequency domain.

It is further to be noted that the above notation is on a per-tone level (that is, the above symbols may refer to one or more specific tones of a plurality of tones), but that tone indices are dropped from the notation for reasons of clarity. It is further to be understood that various embodiments may operate as described herein on only one or more tones of that plurality of tones, whilst other embodiment may operate as described herein on all tones of that plurality of tones.

Figure 1 shows that, in the network-side communication unit 1', downstream information symbol vector $u_O$ may be subjected via downstream diagonal gain scaling matrix $G_O$ to downstream precoding matrix $P_O$, to produce downstream precoded symbol vector $x_O$, which is to be transmitted via the plurality of transmission lines 3'. Downstream information symbol vector $u_O$ may further be fed to a delay operation, for purposes described below.

Downstream precoded symbol vector $x_O$ may be subjected during transmission to downstream far-end crosstalk (FEXT) channel matrix $H_{DS}$, and to network-side near-end crosstalk (including ECHO) channel matrix $H_{O\text{-}NE}$, as interference (shown in the figure as a signal addition) to an upstream signal received from the client-side communication unit 2' on the plurality of transmission lines 3', to produce upstream received symbol vector $y_O$.

The delayed $u_O$ and the upstream received symbol vector $y_O$ may be matrix multiplied using upstream postcoder matrix $E_O$ and network-side near-end crosstalk (including ECHO) mitigation matrix $K_O$, to produce upstream postcoded symbol vector $v_O$, which may be subjected to upstream diagonal FEQ (frequency equalisation) matrix $F_O$, to produce upstream equalized symbol vector $w_O$.

In the client-side communication unit 2', analogous operations may take place as do in the network-side communication unit 1' described above, as will be understood by the skilled person. Therefore, further description of these analogous operations will be omitted.

Figure 1 shows NxN precoding matrices $P_O$ and $P_R$ at the network side communication unit 1' and at the client side (also called "user side") communication unit 2', next to two NxN postcoding matrices $E_O$, $K_O$; $E_R$, $K_R$, also at the network side communication unit 1' and at the client side communication unit 2'. Matrices $K_O$ and $K_R$ may be configured to mitigate near-end crosstalk (NEXT) on the plurality of transmission lines 3', including self-inflicted near-end crosstalk (ECHO), and may need to be fed with a delayed version of input tone data $u_O$ (via a respective delay operation, as illustrated in the figure). It is to be noted that these are postcoding matrices and not precoding matrices. The communication system of Figure 1 may require 6 NxN active vectoring matrices. This may increase the number of vectoring matrices with a factor of 3 with respect to a vectoring scheme based on time-division duplexing, e.g. as employed in G.fast (as defined in International Telecommunication Union - Telecommunication Standardization Sector (ITU-T) Recommendations G.9700 and G.9701), which only considers a single NxN precoder matrix and a single NxN postcoder matrix. As such the existing full-duplex vectoring scheme may be complex, which can lead to a higher cost or to only a limited number of lines that can be served using full-duplex transmission given a fixed hardware budget.

Figure 2A schematically illustrates an exemplary embodiment of a communication system comprising an exemplary embodiment of a communication unit 1 according to the present invention at a network side of a plurality of transmission lines 3 and another exemplary embodiment of a communication unit 2 according to the present invention at a client side of the plurality of transmission lines 3.

The figure shows that the communication units 1; 2 each may perform the following:

- at least two first precoded signals $x_O$; $x_R$ (i.e. generated using precoding (in this representation by being subjected to precoding matrix $P_O$; $P_R$)) for transmitting the at least two first data signals to the other communication unit and for mitigating at least far-end crosstalk on at least at least two first transmission lines of the plurality of transmission lines 3 may be outputted (in this representation by being subjected to downstream far-end crosstalk channel matrix $H_{DS,1}$) to the other communication unit 2; 1 on the at least two first transmission lines of the plurality of transmission lines 3 - this operation may for example be performed by at least two first output ports of a precoder of the respective communication unit, which at least two first output ports may for example be coupled to the at least two first transmission lines;
- at least two precoded signals (i.e. generated using precoding) for mitigating at least near-end crosstalk on at least at least two second transmission lines of the plurality of transmission lines 3 may be outputted on the at least two second transmission lines of the plurality of transmission lines 3 - this operation may for example be performed by at least two second output ports of a precoder of the respective communication unit, which at least two second output ports may for example be coupled to the at least two second transmission lines; and
- at least two second data signals may be received from the other communication unit 2; 1 on the at least two second transmission lines of the plurality of transmission lines 3 - this operation may for example be performed by at least two receiver units of the respective communication unit.

In a particularly preferred embodiment, the network side communication unit 1 may perform the listed operations concurrently, and preferably also the client side communication unit 2 may perform the listed operations concurrently. It will be understood that the first transmission lines in the perspective of the network side communication unit 1 may for example correspond to the second transmission lines in the perspective of the client side communication unit 2, and *vice versa.*

Since both communication units may transmit to each other and may receive from each other, the communication system may be considered to feature bidirectional (i.e. two-way) communication (over the plurality of transmission lines as a whole, but not necessarily over each individual transmission line of the plurality of transmission lines) between both communication units. Moreover, if they can transmit to each other and can receive from each other concurrently, the communication system may be considered to feature full-duplex transmission between both communication units.

In certain embodiments, the at least two first transmission lines (also called: "the first transmission lines") and the at least two second transmission lines (also called: "the second transmission lines") may be different sets of transmission lines - that is, they may differ in at least one transmission line. In particularly preferred embodiments, the first transmission lines and the second transmission lines may be disjunct sets of transmission lines - that is, they may share no transmission lines. In other preferred embodiments, the first transmission lines and the second transmission lines may be identical sets of transmission lines - that is, they may share all their transmission lines. However, it may also be contemplated to provide a middle ground position between these two extremes, wherein the first transmission lines and the second transmission lines share at least one transmission line but not all of their transmission lines.

In the figure, symbols with subscript '1' and subscript '2' may indicate that the respective symbol is more closely associated with downstream traffic and with upstream traffic respectively, although it will be understood that this indication is not meant to limit the symbols.

It can be seen from a comparison of Figure 2A with Figure 1 that the communication system of Figure 2A may require fewer vectoring matrices. Moreover, at least some of the vectoring matrices of the communication system of Figure 2A may be smaller than for the communication system of Figure 1, because they may be configured to operate on only some and not all of the plurality of transmission lines 3.

In other words, computational complexity (e.g. in terms of number of vectoring coefficients) may be reduced with respect to vectoring based on time-division duplexing - furthermore, similar data rate performance and improved latency behaviour may result.

The plurality of transmission lines 3 may thus be divided in at least two first transmission lines (also called "first transmission lines") and at least two second transmission lines (also called "second transmission lines"). Receivers of the first transmission lines may be used to decode downstream signals, and receivers of the second transmission lines may be used to decode upstream signals. This may avoid FEXT between the two groups of transmission lines when using full-duplex transmission. Furthermore, this may avoid NEXT (including ECHO) between the transmission lines of a given group.

Another advantage compared to the currently feasible techniques is that there may be no need for delayed tone data as input for the vectoring engine. Yet another advantage is that there may only be needed a reduced number of interfaces to exchange tone data.

In a particularly advantageous embodiment, one or more of the precoders may be 'tall' precoders (i.e. with more rows than columns). These tall precoders may be designed to mitigate FEXT for the first transmission lines, and to mitigate NEXT (including ECHO) for the second transmission lines. This may be achieved by transmitting on all transmission lines in both directions, while only receiving on a number of transmission lines. This may result in a communication system where FEXT, NEXT and ECHO may be mitigated, and which may allow to have crosstalk-reduced or even crosstalk-free operation so as to guarantee data rates similar to vectoring based on time-division duplexing, as well as a lower latency.

In a specific embodiment, the communication unit 1, 2 may further be adapted for: obtaining a traffic load indication indicating traffic load on the plurality of transmission lines; based on the obtained traffic load indication, determining a desired ratio of downstream traffic to upstream traffic, wherein downstream traffic is traffic going from a network side of the plurality of transmission lines to a client side of the plurality of transmission lines and upstream traffic is traffic going from the client side to the network side; and, based on the determined desired ratio, assigning at least one transmission line of the plurality of transmission lines to one of the at least two first transmission lines and the at least two second transmission lines, such that the ratio of the number of first transmission lines to the number of second transmission lines is in accordance with the desired ratio of downstream traffic to upstream traffic.

In other words, it may be foreseen to change the first transmission lines and/or the second transmission lines (for example, by removing one or more transmission lines from the set of the first transmission lines and adding those one or more transmission lines to the set of the second transmission lines, or *vice versa*) in accordance with (for example in order to be commensurate with, or to be the inverse of) the desired ratio determined based on an obtained traffic load indication.

This may allow to take into account traffic load, and may be advantageously applied if there are sufficient hardware vectoring resources to cope with the associated changes in the sizes of the vectoring matrices. In particular embodiments, the traffic load indication may be an instantaneous prediction or may be a long-term prediction.

These further operations may be performed during operation (also called: "showtime") of the communication unit 1, 2, but may also be performed during downtime.

In an example, if the number of first transmission lines and the number of second transmission lines are equal, that is, if the ratio of the number of first transmission lines to the number of second transmission lines is 1, the ratio between downstream transmission and upstream transmission may also be 1, because equally many transmission lines may then be used for downstream transmission (from the network side communication unit 1 to the client side communication unit 2) as for upstream transmission (from the client side communication unit 2 to the network side communication unit 1). In this particular case, if the total number of transmission lines 3 is denoted as N, the gain scaling matrices $G_{O,1}$ and $G_{R,2}$ as well as the diagonal FEQ matrices $F_{O,2}$ and $F_{R,1}$ may be of size N/2xN/2, the precoding matrices $P_O$ and $P_R$ may be of size NxN/2, and the channel matrices $H_{DS,1}$, $H_{US,2}$, $H_{O-NE,2}$, and $H_{R-NE,1}$ may be of size N/2xN. A system model for this particular example will be described below.

In another example, the ratio of the number of first transmission lines to the number of second transmission lines may be 4 from the perspective of the network-side communication unit 1 and (consequently) 0.25 from the perspective of the client-side communication unit 2, if 80% of the available transmission lines 3 are first transmission lines and (consequently) 20% of the available transmission lines 3 are second transmission lines. In this example, it may be assumed that all available transmission lines 3 are used - however, it will be understood that this need not necessarily be the case.

In this other example, if the total number of transmission lines 3 is denoted as N, the gain scaling matrix $G_{O,1}$ and the diagonal FEQ matrices $F_{R,1}$ may be of size 0.8Nx0.8N, the gain scaling matrix $G_{R,2}$ as well as the diagonal FEQ matrix $F_{O,2}$ may be of size 0.2Nx0.2N, the precoding matrix $P_O$ may be of size Nx0.8N and the precoding matrix $P_R$ may be of size Nx0.2N, and the channel matrices $H_{DS,1}$ and $H_{R-NE,1}$ may be of size 0.8NxN and the channel matrices $H_{US,2}$ and $H_{O-NE,2}$ may be of size 0.2NxN.

Moreover, in various embodiments, the ratio between the number of first transmission lines and the number of second transmission lines may lie in a range between these two examples.

The system model mentioned above will be explained now (ignoring gain scaling and frequency equalisation) for a particular embodiment, wherein half of the available transmission lines are used as the first transmission lines (e.g. for FEXT and NEXT mitigation and for data transmission) and wherein the other half of the available transmission lines are used as the second transmission lines (e.g. for mitigating FEXT and NEXT and for data reception), using the notations explained hereinabove.

Equation 1:

$$\begin{bmatrix} y_R \\ y_O \end{bmatrix} = \begin{bmatrix} H_{DS} & H_{R-NE} \\ H_{O-NE} & H_{US} \end{bmatrix} \begin{bmatrix} P_O & 0 \\ 0 & P_R \end{bmatrix} \begin{bmatrix} u_O \\ u_R \end{bmatrix}$$

In Equation 1, in this particular example, on the right-hand side, the two first matrices may each be of size 2Nx2N.

In Equation 1, sub-matrices may be used to make the division of the transmission lines explicit. This is shown in Equation 2 below.

Equation 2:

$$
\begin{bmatrix} y_{R,1} \\ y_{R,2} \\ y_{O,1} \\ y_{O,2} \end{bmatrix} = \begin{bmatrix} H_{DS1} & H_{R-NE1} \\ H_{DS2} & H_{R-NE2} \\ H_{O-NE1} & H_{US1} \\ H_{O-NE2} & H_{US2} \end{bmatrix} \begin{bmatrix} P_{O,1} & P_{O,2} & 0 & 0 \\ 0 & 0 & P_{R,1} & P_{R,2} \end{bmatrix} \begin{bmatrix} u_{O,1} \\ u_{O,2} \\ u_{R,1} \\ u_{R,2} \end{bmatrix}
$$

In Equation 2, $u_{O,1}$ may represent the first data signals and $u_{R,2}$ may represent the second data signals, from the perspective of the communication unit. Moreover, $y_{O,2}$ and $y_{R,1}$ may represent the (received) second data signals. It is to be noted that in this specification the term "data signal" may refer to a signal directly representing data but may also refer to a signal from which data can be obtained indirectly using a processing step.

From Equation 2, receiving transmission lines may be allocated to downstream (denoted with subscript '1') or upstream (denoted with subscript '2').

Equation 3:

$$
\begin{bmatrix} y_{R,1} \\ X \\ X \\ y_{O,2} \end{bmatrix} = \begin{bmatrix} H_{DS1} & H_{R-NE1} \\ X & X \\ X & X \\ H_{O-NE2} & H_{US2} \end{bmatrix} \begin{bmatrix} P_{O,1} & 0 & 0 & 0 \\ 0 & 0 & 0 & P_{R,2} \end{bmatrix} \begin{bmatrix} u_{O,1} \\ 0 \\ 0 \\ u_{R,2} \end{bmatrix}
$$

In Equation 3, 'X' may denote a value "don't care", and '0' may denote that there is no input or coefficient. The absence of input may also be understood to follow from the precoder having at least two "zero" inputs, that is, two unused inputs that are not used for inputting a data signal to the precoder. In this particular exemplary embodiment, the precoder has two such "zero" input ports, that is, two vectors of size N/2 with only zeroes may be provided to the precoder as input.

In Equation 3, in this particular example, $P_{O,1}$ and $P_{R,2}$ may be of size NxN/2.

Equation 4:

$$
\begin{bmatrix} y_{R,1} \\ y_{O,2} \end{bmatrix} = \begin{bmatrix} H_{DS1} & H_{R-NE1} \\ H_{O-NE2} & H_{US2} \end{bmatrix} \begin{bmatrix} P_{O,1} & 0 \\ 0 & P_{R,2} \end{bmatrix} \begin{bmatrix} u_{O,1} \\ u_{R,2} \end{bmatrix}
$$

Equation 4 represents a more concise formulation of Equation 3.

Here, a block diagonalizing design may be used on the precoding matrices $P_{O,1}$ and $P_{R,2}$. In particular, $P_{O,1}$ may be chosen to cancel NEXT (including ECHO) at the network side - that is, $H_{O-NE,2}P_{O,1} = 0$. Further, $P_{R,2}$ may be chosen to cancel NEXT (including ECHO) at the client side - that is, $H_{R-NE,1}P_{R,2} = 0$.

This may be reduced to a FEXT-limited system only, in Equation 5.

Equation 5:

$$\begin{bmatrix} y_{R,1} \\ y_{O,2} \end{bmatrix} = \begin{bmatrix} \hat{H}_{DS,1} & 0 \\ 0 & \hat{H}_{US,2} \end{bmatrix} \begin{bmatrix} u_{O,1} \\ u_{R,2} \end{bmatrix}$$

From Equation 5, an outer small precoder (in this particular example of size N/2xN/2) may for example be included in the precoding matrices $P_O$ and $P_R$ in order to improve performance, as no extra coefficients may be needed. This may result in a zero-forcing linear precoder design for diagonalizing transmission and mitigating FEXT and NEXT (including ECHO), as shown in Equation 6.

Equation 6:

$$\begin{bmatrix} y_{R,1} \\ y_{O,2} \end{bmatrix} = \begin{bmatrix} \hat{D}_{DS,1} & 0 \\ 0 & \hat{D}_{US,2} \end{bmatrix} \begin{bmatrix} u_{O,1} \\ u_{R,2} \end{bmatrix}$$

However, it will be understood that a non-linear precoder design may also be used, as is described elsewhere herein.

In summary, the design of the precoding matrices may for example be as follows:

$$\tilde{H} = \begin{bmatrix} H_{DS,1} \\ H_{O-NE,2} \end{bmatrix}$$

$$P = \tilde{H}^{-1}$$

$$P_{0,1} = P(:, set1)$$

$$\tilde{H} = \begin{bmatrix} H_{R-NE,1} \\ H_{US,2} \end{bmatrix}$$

$$P = \tilde{H}^{-1}$$

$$P_{R,2} = P(:, set2)$$

In this notation, ':' may indicate that all rows of a matrix are selected. Thus, here, $P_{O,1}$ may comprise all rows of matrix P and the columns corresponding with the particular transmission lines in set 1 (set of the first transmission lines), whereas $P_{R,2}$ may comprise all rows of matrix P and the columns corresponding with the particular transmission lines in set 2 (set of the second transmission lines).

The performance of such a communication system may be simulated for a realistic cable binder (with measured FEXT, and following a realistic statistical NEXT model and -40 dB flat ECHO) of 10 lines (80 m of realistic cable, 212 MHz). The resulting performance may indicate that aggregate performance may be of the same order as time-division duplexing based communication systems, while the present communication system may require less vectoring coefficients.

It is to be noted that various embodiments of the present invention can also be used for a communication system with bonding lines. For instance, a first pair of two bonding pairs may be used to receive a downstream signal while at the same time NEXT (including ECHO) may be cancelled for the second pair. The second pair of the bonding pair may be used to receive an upstream signal while at the same time mitigating NEXT (including ECHO) for the first pair.

Figure 2B schematically illustrates an exemplary implementation of the exemplary embodiment of a communication system of Figure 2A. The figure shows a network-side communication unit 1 connected to a client-side communication unit 2 via a plurality of transmission lines 3, in particular transmission lines 31, 32, 33 and 34.

The communication units 1, 2 are shown schematically and may comprise a respective vectoring processor 10, 20, and four respective physical interfaces 11, 12, 13 and 14, and 21, 22, 23 and 24.

Physical interfaces 11, 12, 13 and 14 of the network-side communication unit 1 may be coupled to respective transmitter analogue frontends 111, 121, 131 and 141. Physical interfaces 13 and 14 may further also be coupled to respective receiver analogue frontends 132 and 142. Frontends 111 and 121 may be directly or indirectly coupled to their respective transmission lines 31 and 32, whereas the other frontends may be indirectly coupled to their respective transmission lines 33 and 34 via respective hybrids 130 and 140.

Physical interfaces 21, 22, 23 and 24 of the client-side communication unit 2 may be coupled to respective transmitter analogue frontends 211, 221, 231 and 241. Physical interfaces 21 and 22 may further also be coupled to respective receiver analogue frontends 212 and 222. Frontends 231 and 241 may be directly or indirectly coupled to their respective transmission lines 33 and 34, whereas the other frontends may be indirectly coupled to their respective transmission lines 31 and 32 via respective hybrids 210 and 220.

By operating according to the operation of the corresponding communication units as described above with reference to Figure 2A, communication data may effectively be sent from frontend 111 to frontend 212 and from frontend 121 to frontend 222, as well as from frontend 231 to frontend 132 and from frontend 241 to frontend 142. Moreover, the transmitter analogue frontends 111, 121, 131, 141, 211, 221, 231 and 241 may transmit or apply precompensation data on their respective transmission lines in order to mitigate not only far-end crosstalk but also near-end crosstalk (including ECHO), in order to improve the signal quality of the communication data.

As shown, each vectoring processor 10, 20 may only require two inputs and four outputs for this exemplary implementation. Consequently, the required number of interfaces can be reduced. Also, the total number of analogue frontends that is required can also be reduced. Moreover, it can be seen that both communication units 1, 2 may transmit during all available time slots, thus providing full-duplex transmission.

Figure 3 schematically illustrates another exemplary embodiment of a communication system comprising an exemplary embodiment of a communication unit 1 according to the present invention at a network side of a plurality of transmission lines 3 and another exemplary embodiment of a communication unit 2 according to the present invention at a client side of the plurality of transmission lines 3, e.g. a further development of the embodiment shown in Figure 2.

In this other exemplary embodiment, the precoding may for example performed using a concatenation of a non-linear precoding scheme and a linear precoding scheme. The linear precoding scheme is (still) represented in the figure using precoding matrix $P_O$ for the network-side communication unit 1 and precoding matrix $P_R$ for the client-side communication unit 2. Additionally, the non-linear precoding scheme is represented in the figure using for example a Tomlinson-Harashima precoding component $THP_O$ for the network-side communication unit 1 and another Tomlinson-Harashima precoding component $THP_R$ for the client-side communication unit 2. However, it is to be noted that other types of non-linear precoding schemes may also be used. It will further be understood that such a non-linear precoding scheme may also be used at only one communication unit instead of both.

Figure 4 schematically illustrates another exemplary embodiment of a communication system comprising an exemplary embodiment of communication unit 1 according to the present invention at a network side of a plurality of transmission lines 3 and another exemplary embodiment of a communication unit 2 according to the present invention at a client side of the plurality of transmission lines 3, e.g. a further development of the embodiment shown in Figure 2.

In this other exemplary embodiment, a linear postcoder $E_{O,2}$ may additionally be applied to the received signal $y_{O,2}$ to produce upstream postcoded symbol vector $v_{O,2}$, and a linear postcoder $E_{R,1}$ may additionally be applied to the received signal $y_{R,1}$ to produce downstream postcoded symbol vector $v_{R,1}$. It will be understood that such a linear postcoder may also be used at only one communication unit instead of both.

Figure 5 schematically illustrates another exemplary embodiment of a communication system comprising an exemplary embodiment of a communication unit 1 according to the present invention at a network side of a plurality of transmission lines 3 and at least two other exemplary embodiments of a communication unit 2A, 2B, 2C according to the present invention at a client side of the plurality of transmission lines 3, e.g. a further development of the embodiment shown in Figure 2.

This other exemplary embodiment shows that one network-side communication unit 1, e.g. an access node, and at least one, in this example three, client-side communication units 2A-2C, e.g. multiple CPEs, may be connected to more than one transmission line (e.g. twisted pairs). This type of embodiment may preferably be used if the NEXT between the lines of different client-side communication units is small or can be neglected. This is a setting that can occur in e.g. a MDU (multi-dwelling unit) deployment, where a common cable binder part is short compared to total twisted pair lengths, and/or where the client-side communication units 2A-2C are located far enough from each other.

For this setting, each client-side communication unit 2A, 2B, 2C may operate as the client-side communication units 2 of any one of the above described embodiments. For example, communication unit 2A may take into account only the transmission lines 3 connecting it to the network-side communication unit 1, that is, the transmission lines in set 1 and in set 2. Further, communication unit 2B may take into account only the transmission lines 3 connecting it to the network-side communication unit 1, that is, the transmission lines in set 3 and in set 4. Further, communication unit 2C may take into account only the transmission lines 3 connecting it to the network-side communication unit 1, that is, the transmission lines in set 5 and in set 6. Moreover, the network-side communication unit 1 may also operate as the network-side communication unit 1 of any one of the above described embodiments, taking into account all of the transmission lines 3 (but preferably such that on a particular set or on particular sets of transmission lines 3 only the near-end crosstalk is mitigated that is relevant for the particular set or sets of transmission lines 3 corresponding respectively to each client-side communication unit 2A-2C - this type of near-end crosstalk may also be called "intra-NEXT").

In this particular example, there may in total be 12 transmission lines 3, and each client-side communication unit 2A, 2B, 2C may be assigned 4 transmission lines 3 of the 12 transmission lines 3, for example 2 per set. In this case, each client-side communication unit 2A, 2B, 2C may comprise a respective precoder 20A, 20B, 20C of size 4x2. Also, since all 12 transmission lines 3 are connected to the network-side communication unit 1, the network-side communication unit 1 may comprise a precoder 10 of size 12x6. However, it will be understood that other configurations are also possible - this configuration may even change dynamically, for example, if traffic load is taken into account as is described hereinabove.

Figure 6 schematically illustrates another exemplary embodiment of a communication unit 1 according to the present invention.

In the figure, the following symbols denote the following entities:

- $u_{1,DS}$, $u_{2,DS}$,.., $u_{N,DS}$: information symbols (before precoding) for downstream transmission;

- $x_1$, $x_2$, .., $x_N$: first precoded signals (precompensation data and communication data);

- $x_{N+1}$, $x_{N+2}$,.., $x_{2N}$: second precoded signals (precompensation data) for NEXT mitigation;

- $y_1$, $y_2$, .., $y_N$: received signals for upstream transmission;

- $w_{1,US}$, $w_{2,US}$, .., $w_{N,US}$: received postcoded signals;

- DFE: digital front-end;

- ADC: analogue to digital converter;

- DAC: digital to analogue converter;

- LD: line driver;

- LNA: low-noise amplifier; and

- NEXT-DAC: near-end crosstalk digital to analogue converter.

The figure shows a plurality of transmission lines 3, in particular twisted pairs 31, 32, ..., 3N. These may each be connected to a hybrid (denoted in the figure 'H'), for transmission and reception over the respective transmission line. Signals may be provided to and obtained from a respective digital frontend denoted DFE, and may be transferred to the respective hybrid H via a respective line driver denoted LD, and may be transferred from the respective hybrid H via one or more respective low-noise amplifiers denoted LNA.

In this other exemplary embodiment, a precoder 601 (of size 2NxN) may be used to precode the information symbols $u_{1,DS}$-$u_{N,DS}$ (that is, first data signals) to produce first precoded signals $x_1$-$x_N$ and second precoded signals $x_{N+1}$-$x_{2N}$.

Furthermore, the at least two second precoded signals may be outputted (in other words, applied) on the at least two second transmission lines by inserting it along the respective reception paths of the communication unit and by combining it in the analogue domain with the received at least two second data signals. In this particular example, the second precoded signals $x_{N+1}$, $x_{N+2}$, ..., $x_{2N}$ may be applied using respective near-end crosstalk digital to analogue converters 61, 62, ..., 6N, and using respective combiners (represented in the figure using a signal adder denoted '+') 610, 620, ..., 6N0, to feed the second precoded signals back into the reception path of each of the transmission lines 31, 32, ..., 3N.

It is to be noted that a "reception path" of a communication unit may refer to any path of the communication unit normally carrying data that have been received from one or more transmission lines. Analogously, a "transmission path" of a communication unit may refer to any path of the communication unit normally carrying data that are to be transmitted via one or more transmission lines. Such reception paths and transmission paths may for example be transceiver units (or separately: receivers and transmitters), but may also be stages in the process of receiving and transmitting signals.

Moreover, a postcoder 602 (of size NxN) may be used to postcode the received data signals $y_1$-$y_N$ (of the upstream transmission) to produce received postcoded signals $w_{1,US}$-$w_{N,US}$.

This other exemplary embodiment may thus couple back the second precoded signals in the analogue domain using a near-end crosstalk digital to analogue converter (which may for example be a regular digital to analogue converter adapted to convert precompensation data for near-end crosstalk mitigation) and a combiner. In this way, there may be no need for additional transmission lines (e.g. twisted pairs) to cancel near-end crosstalk (including ECHO). Moreover, saturation can be avoided if the near-end crosstalk aggregate power is larger than the aggregate received signal power.

The skilled person will understand from the foregoing description that a communication unit according to the present invention, for bidirectional communication on a plurality of transmission lines of a communication system, the plurality of transmission lines connecting the communication unit of the communication system to another communication unit of the communication system, may thus comprise a precoder with at least two first and at least two second output ports and at least two input ports, and at least two receiver units. The at least two first and at least two second output ports may be for outputting respective precoded generated signals and the at least two input ports may be for inputting at least two first data signals. The number of output ports may be greater than the number of input ports. The at least two first output ports may be coupled to at least two first transmission lines of the plurality of transmission lines, and may be configured to output at least two first precoded signals on the at least two first transmission lines for transmitting the at least two first data signals to the other communication unit and for mitigating at least far-end crosstalk on at least the at least two first transmission lines. The at least two second output ports may be coupled to at least two second transmission lines of the plurality of transmission lines, and may be configured to output at least two second precoded signals on the at least two second transmission lines for mitigating at least near-end crosstalk on at least the at least two second transmission lines. The at least two receiver units may be configured for receiving at least two second data signals from the other communication unit on the at least two second transmission lines.

In a first preferred embodiment, a first half of the available transmission lines may belong to the first transmission lines, and a complementary second half of the available transmission lines may belong to the second transmission lines. A first half of the available output ports of the precoder may belong to the first output ports and a complementary second half of the available output ports may belong to the second output ports. The first output ports and the first transmission lines may be used for transmitting data and for mitigating FEXT, but also for mitigating NEXT. The second output ports and the second transmission lines may be used for mitigating NEXT, but also for mitigating FEXT. The first transmission lines may thus carry data from the present communication unit to the other communication unit, whereas the second transmission lines may thus carry data from the other communication unit to the present communication unit. In particular, the precoder may have only half the number of input ports (that are actually used with a useful input data signal) as output ports (including first and second output ports). It will be understood that this first preferred embodiment advantageously may require fewer analogue hardware components.

In a second preferred embodiment, all available transmission lines may belong to both the first transmission lines and the second transmission lines - in other words, the first and the second transmission lines may be identical sets. Consequently, all transmission lines may carry data to be transmitted and data to be received simultaneously. As in the first preferred embodiment, in this second preferred embodiment, the precoder may have fewer, for example half as many, useful input ports than (as) first and second output ports. The first output ports may preferably directly be coupled to transmission paths of the communication unit (for example to respective hybrids) of the transmission lines for mitigating FEXT and for transmitting data. The second output ports may be coupled to reception paths of the communication unit (for example to combiners on the opposite side of the respective hybrids with respect to the respective transmission lines) for mitigating NEXT. It will be understood that this second preferred embodiment advantageously may use all transmission lines effectively. However, it will be understood that there may be one or more transmission lines not belonging to the first and second transmission lines, without difficulty for the skilled person.

In a third preferred embodiment, the layout may be the same as in the first preferred embodiment, with the difference that the second output ports may be coupled to reception paths of the communication unit (for example to combiners on the opposite side of the respective hybrids with respect to the respective transmission lines), but it may be considered to only use the first output ports and the first transmission lines for mitigating FEXT and for transmitting data - thus not also for mitigating NEXT. Also, it may be considered to only use the second output ports and the second transmission lines for mitigating NEXT - thus not also for mitigating FEXT. It will be understood that this third preferred embodiment advantageously may reduce complexity of logical design of the precoder and the assorted control logic.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A communication unit for communication on a plurality of transmission lines of a communication system, the plurality of transmission lines connecting the communication unit of the communication system to another communication unit of the communication system; the communication unit comprising:

- a precoder comprising at least two first and at least two second output ports for outputting respective precoded generated signals and at least two input ports for inputting at least two first data signals, wherein the number of output ports is greater than the number of input ports; wherein
- the at least two first output ports are coupled to at least two first transmission lines of the plurality of transmission lines, and are configured to output at least two first precoded signals on the at least two first transmission lines for transmitting the at least two first data signals to the other communication unit and for mitigating at least far-end crosstalk on at least the at least two first transmission lines;
- the at least two second output ports are coupled to at least two second transmission lines of the plurality of transmission lines, and are configured to output at least two second precoded signals on the at least two second transmission lines for mitigating at least near-end crosstalk on at least the at least two second transmission lines; and wherein the communication unit further comprises:
- at least two receiver units configured for receiving at least two second data signals from the other communication unit on the at least two second transmission lines.

2. The communication unit of claim 1, wherein the at least two first transmission lines and the at least two second transmission lines are different sets of transmission lines.

3. The communication unit of claim 2, wherein the at least two second output ports are coupled to the at least two second transmission lines in such a way as to insert the at least two second precoded signals along at least two respective transmission paths of the communication unit; wherein the at least two second precoded signals are further for mitigating at least far-end crosstalk on at least the at least two second transmission lines; and wherein the at least two first precoded signals are further also for mitigating at least near-end crosstalk on at least the at least two first transmission lines.

4. The communication unit of claim 2, wherein the at least two second output ports are coupled to the at least two second transmission lines in such a way as to insert the at least two second precoded signals along at least two respective reception paths of the communication unit and to combine it with the at least two second data signals in the analogue domain.

5. The communication unit of claim 1, wherein the at least two first transmission lines and the at least two second transmission lines are identical sets of transmission lines; and wherein the at least two second output ports are coupled to the at least two second transmission lines in such a way as to insert the at least two second precoded signals along at least two respective reception paths of the communication unit and to combine it with the at least two second data signals in the analogue domain.

6. The communication unit of any one of the claims 2-4, further adapted for:

- obtaining a traffic load indication indicating traffic load on the plurality of transmission lines;
- based on the obtained traffic load indication, determining a desired ratio of downstream traffic to upstream traffic, wherein downstream traffic is traffic going from a network side of the plurality of transmission lines to a client side of the plurality of transmission lines and upstream traffic is traffic going from the client side to the network side; and
- based on the determined desired ratio, assigning at least one transmission line of the plurality of transmission lines to one of the at least two first transmission lines and the at least two second transmission lines, such that the ratio of the number of first transmission lines to the number of second transmission lines is in accordance with the desired ratio of downstream traffic to upstream traffic.

7. The communication unit of any one of the claims 1-6, comprising a postcoder configured for applying linear postcoding to the received at least two second data signals.

8. A method for communication on a plurality of transmission lines of a communication system, the plurality of transmission lines connecting a communication unit of the communication system to another communication unit of the communication system; the method comprising at the communication unit:

- outputting at least two first precoded signals on at least two first transmission lines of the plurality of transmission lines, for transmitting at least two first data signals to the other communication unit on the at least two first transmission lines and for mitigating at least far-end crosstalk on at least the at least two first transmission lines;
- outputting at least two second precoded signals on at least two second transmission lines of the plurality of transmission lines, for mitigating at least near-end crosstalk on at least the at least two second transmission lines; and
- receiving at least two second data signals from the other communication unit on the at least two second transmission lines.

9. The method of claim 8, wherein the at least two first transmission lines and the at least two second transmission lines are different sets of transmission lines.

10. The method of claim 9, wherein the at least two second precoded signals are inserted along at least two respective transmission paths of the communication unit; wherein the at least two second precoded signals are further for mitigating at least far-end crosstalk on at least the at least two second transmission lines; and wherein the at least two first precoded signals are further also for mitigating at least near-end crosstalk on at least the at least two first transmission lines.

11. The method of claim 9 wherein the at least two second precoded signals are inserted along at least two respective reception paths of the communication unit and combined with the at least two second data signals in the analogue domain.

12. The method of claim 8, wherein the at least two first transmission lines and the at least two second transmission lines are identical sets of transmission lines; and wherein the at least two second precoded signals are inserted along at least two respective reception paths of the communication unit and combined with the at least two second data signals in the analogue domain.

13. The method of any one of the claims 9-11, further comprising:

- obtaining a traffic load indication indicating traffic load on the plurality of transmission lines;
- based on the obtained traffic load indication, determining a desired ratio of downstream traffic to upstream traffic, wherein downstream traffic is traffic going from a network side of the plurality of transmission lines to a client side of the plurality of transmission lines and upstream traffic is traffic going from the client side to the network side; and
- based on the determined desired ratio, assigning at least one transmission line of the plurality of transmission lines to one of the at least two first transmission lines and the at least two second transmission lines, such that the ratio of the number of first transmission lines to the number of second transmission lines is in accordance with the desired ratio of downstream traffic to upstream traffic.

14. The method of any one of the claims 8-13, comprising applying linear postcoding to the received at least two second data signals.

15. A computer program product comprising a computer-executable program of instructions for performing, when executed on a computer, the steps of the method of any one of claims 8-14.

FIG.1

**FIG. 2A**

## FIG. 2B

EP 3 331 170 A1

FIG. 3

FIG. 4

FIG. 5

EP 3 331 170 A1

FIG. 6

Europäisches
Patentamt

European
Patent Office

Office européen
des brevets

# EUROPEAN SEARCH REPORT

Application Number

EP 16 30 6616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/215935 A1 (NUZMAN CARL [US] ET AL) 22 August 2013 (2013-08-22) * figures 3A, 3E * * paragraph [0057] * * paragraph [0084] - paragraph [0088] * * paragraph [0132] * * paragraph [0136] * ----- | 1-15 | INV. H04B3/32 |
| Y | US 8 279 783 B1 (BATES STEPHEN [CA] ET AL) 2 October 2012 (2012-10-02) * figures 4,9 * * column 4, line 13 - line 15 * * column 4, line 32 - line 43 * * column 5, line 21 - line 30 * ----- | 1-15 | |
| A | US 2006/062166 A1 (JONES WILLIAM W [US] ET AL) 23 March 2006 (2006-03-23) * paragraph [0029] - paragraph [0031] * ----- | 4,5,11, 12 | |
| A | US 7 706 434 B1 (FARJADRAD RAMIN [US] ET AL) 27 April 2010 (2010-04-27) * figure 4 * * column 2, line 31 - line 46 * ----- | 4,5,11, 12 | TECHNICAL FIELDS SEARCHED (IPC) H04B |

The present search report has been drawn up for all claims

| Place of search | Date of completion of the search | Examiner |
|---|---|---|
| The Hague | 2 February 2017 | Gimmler-Dumont, C |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 3 331 170 A1**

## ANNEX TO THE EUROPEAN SEARCH REPORT
## ON EUROPEAN PATENT APPLICATION NO.

EP 16 30 6616

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2017

| Patent document cited in search report | | | Publication date | Patent family member(s) | | | Publication date |
|---|---|---|---|---|---|---|---|
| US 2013215935 | A1 | | 22-08-2013 | CN | 104254979 | A | 31-12-2014 |
| | | | | EP | 2815515 | A1 | 24-12-2014 |
| | | | | JP | 6014686 | B2 | 25-10-2016 |
| | | | | JP | 2015513827 | A | 14-05-2015 |
| | | | | KR | 20140125432 | A | 28-10-2014 |
| | | | | US | 2013215935 | A1 | 22-08-2013 |
| | | | | WO | 2013122883 | A1 | 22-08-2013 |
| US 8279783 | B1 | | 02-10-2012 | NONE | | | |
| US 2006062166 | A1 | | 23-03-2006 | US | 2004213354 | A1 | 28-10-2004 |
| | | | | US | 2006062166 | A1 | 23-03-2006 |
| US 7706434 | B1 | | 27-04-2010 | NONE | | | |

For more details about this annex : see Official Journal of the European Patent Office, No. 12/82